# EUROPÄISCHE PATENTSCHRIFT

(11) **EP 0 423 400 B1**
(45) Veröffentlichungstag und Bekanntmachung des Hinweises auf die Patenterteilung: **27.04.1994**
(21) Anmeldenummer: 89250058.8
(22) Anmeldetag: 16.10.1989
(51) Int. Cl.: F23G 5/40, F23G 7/00, F23G 5/04, F26B 19/00, F26B 7/00, C02F 9/00

(54) **Entsorgungseinrichtung**
Waste disposal device
Dispositif d'évacuation de déchets

(43) Veröffentlichungstag der Anmeldung: 24.04.1991
(73) Patentinhaber: DEUTSCHE VOEST-ALPINE INDUSTRIEANLAGENBAU GMBH, 40219 Düsseldorf (DE)
(72) Erfinder: Hahn, Ulrich, D-4600 Dortmund 50 (DE); Bender, Joachim, Dipl.-Ing., D-4000 Düsseldorf 1 (DE)
(74) Vertreter: Pfenning, Meinig & Partner

(56) Entgegenhaltungen:
- DE-A- 3 047 060
- DE-A- 3 325 078
- WASSER, LUFT UND BETRIEB, Band 3, 1982, Seiten 37-38, Mainz, DE; "Entwässerung und Konditionierung von Klärschlamm"

## Beschreibung

Die Erfindung bezieht sich auf eine Entsorgungseinrichtung für wasserhaltige Abfallstoffe, wie Klärschlamm, Feuchtabfälle in Gärtnereien und dgl. mehr, bei der die für die Trockung erforderliche Verdampfungsenergie zumindest zu einem erheblichen Teil aus der Verbrennung der Feststoffanteile des Ausgangsmaterials gewonnen wird, wobei die Einrichtung aus einem Wirbelschichttrockner dem wahlweise ein mechanischer Vortrockner vorgeschaltet sein kann, sowie einem Feststoffabscheider, Feststoffbrenner, Ascheabscheider und Wärmetauscher besteht.
Eine derartige Vorrichtung ist aus der DE-PS 30 47 060 bekannt. Dort geht es insbesondere um das Trocknen und Verbrennen von Schlamm, wobei der auf ca. 10 bis 40% Feststoffanteile vorgetrocknete Schlamm in den unteren Bereich einer Wirbelschicht eingegeben wird, durch deren Wärmeträger-Schüttgut hindurch die Aufwirbelung der Schicht bewirkende heiße Verbrennungsgase strömen, so daß aus dem Schlamm getrocknetes Gut entsteht, welches über einen Feststoffabscheider vom Wirbelgas getrennt wird und nachfolgend einem Feststoffbrenner zugeführt wird, der die genannten Verbrennungsgase für den Wirbelschichttrockner liefert. Damit wird eine vorteilhafte und weitgehende Ausnutzung des Wäremeinhalts der Verbrennungsgase aus der Trockensubstanz des Schlamms möglich, bei gleichzeitg optimal steuerbarer Rückführung des Wirbelgases in den Prozeßablauf.

Da der Heizwert und entsprechend auch der Aschegehalt der hier angesprochenen Trockensubstanzen, in der Regel zwischen relativ weiten Grenzen schwanken kann, ist insbesondere auch für die Anfahrphase der bekannten Einrichtungvorgesehen zusätzliche Brennstoffe, wie beispielsweise Öl, dem Feststoffbrenner nach Bedarf zuführen zu können. Als Auflockerungs/Wärmeträger-Schüttgut wird Sand mit einer hinlänglich gleichmäßigen Korngrößenverteilung verwendet, wobei die Auswahl der Korngrößen sich nach den für Wirbelschichten bekannten Kriterien richtet. Das Schüttgut in der Form als Wirbelschicht sorgt für eine disperse Verteilung des Schlamms und verhindert damit von vornherein das Auftreten von Agglomerationen, wofür für eine gleichmäßige Schlammverteilung über den Querschnitt der Wirbelschicht Sorge zu tragen ist. Im Feststoffbrenner werden die getrockneten Schlammpartikel bei Temperaturen zwischen 1200 und 1800° C verbrannt, woraufhin die in einem Abscheider von der anfallenden Asche befreiten Verbrennungsgase direkt in die Wirbelschicht eingespeist werden. Falls gewünscht, kann die Ascheabscheidung unmittelbar im Unterteil des Feststoffbrenners erfolgen, so beispielsweise in ein Wasserbad ausgetragen werden.

Derartige bekannte stationäre Einrichtungen werden mit Erfolg bei dem hohen Schlammanfall in Städten und Gemeinden in deren Entwässerungsbetrieben eingesetzt. Überall dort, wo Faulschlamm, Frischschlamm, Überschußschlamm u.dgl., sowie andere organische Naßabfälle, in geringeren Mengen oder nur sporadisch anfallen, wie beispielsweise in kleinen kommunalen und industriellen Abwasserreinigungsanlagen, Gärtnereien, kleineren Unternehmen, Krankenhäusern, Abdeckereien oder dergleichen, lohnt sich der Einsatz solcher stationärer Einrichtungen jedoch weniger, d.h. ihre Ausnutzung ist zu gering oder die Stillstandszeiten sind zu groß, um ein wirtschaftliches Kosten-Nutzen-Verhältnis vorgeben zu können.

Eine mobile Vorrichtung zur Wirbelschichtverbrennung von Faulschlamm, bestehend aus Faulschlammbunkern, einem Wirbelschichtofen mit angeschlossenem Kessel, Entstauber, Filtern und einem Aschebunker sowie zugehörigen Förderern, Leitungen, Steuer- und Dosiereinrichtungen ist aus der DE 33 25 078 bekannt. Bei dieser Vorrichtung wird durch eine externe mechanische Entwässerungseinrichtung eine weitgehende Entwässerung vorgenommen und der so behandelte Faulschlamm der gesondert auf einem anderen Fahrzeug installierten Wirbelschichtverbrennung zugeführt und dort in Faulschlammbunkern zwischengelagert.

Neben der unbefriedigenden Art und Weise der thermischen Verbrennung bei gleichzeitiger Trocknung in einem Wirbelschichtofen weist diese bekannte Vorrichtung noch den Nachteil auf, daß keine ständige mechanische Entwässerungseinheit vorhanden ist. Diese also entweder Vorort installiert oder gesondert zum Entsorgungsort transportiert werden muß, was logistische Probleme zur Folge hat und zusätzlich durch die Verwendung verschiedener Anlagen zur mechanischen Entwässerung, wie beispielsweise Zentrifugen oder Siebbandpressen, ständig andere Entwässerungsgrade auftreten, an die die thermische Verbrennung anzupassen ist.

Hier setzt die vorliegende Erfindung ein, die ausgehend von einer Entsorgungseinrichtung der gattungsgemäßen Art die Aufgabe lösen soll, auch bei geringeren oder nur temporär anfallenden schlammigen oder breiartigen und anderen Abfallmengen mit hoher Ausgangsfeuchte eine Einrichtung zur Verfügung zu stellen, mit der sich das Kosten-Nutzen-Verhältnis an die jeweilige Problemstellung anpaßbar optimieren läßt.

Die Lösung dieser Aufgabe wird mit einer mobilen Entsorgungseinrichtung erreicht, wie sie sich durch die Merkmale des Kennzeichens des Anspruches 1 ergibt.

Die Unteransprüche zeigen vorteilhafte Ausgestaltungen bzw. Weiterbildungen dieser erfindungsgemäßen Aufgabenlösung.

Dadurch, daß das Verfahren zum Trocknen und Verbrennen von Naßabfällen mittels einer auf einem Kraftfahrzeug zu einer kompakten Einheit zusammengefaßten Einrichtung durchgeführt werden kann, wird hier nicht nur, wie in den bekannten Fällen der LKW-gestützten Zementmischer, Zeit für den Verfahrensablauf während des Transportes eingespart, sondern überhaupt erst die Möglichkeit eröffnet, für mittlere und kleinere Abnehmer in besonders umweltfreundlicher Weise Entsorgungen von Problemabfällen vornehmen zu können. Die Trennung von mechanischer Vorentwässerung auf einem LKW-Hänger einerseits und der eigentlichen Trocknung und Verbrennung des so vorbehandelten Ausgangsmaterials andererseits auf der Ladefläche des LKW's selbst, bietet darüber hinaus die Möglichkeit einer variablen Anpassung an örtliche oder räumliche Gegebenheiten bzw. einer mitunter erforderlich werdenden wenigstens hinlänglich getrennten Aufbereitung von Flüssigabfällen der zunächst entweder zwingend erfroderlichen, oder aber auch verzichtbaren Voranreicherung des Feststoffmaterials bis zur Eindüsung des weitgehend homogenisierten Rohproduktes in die trocknende Wirbelschicht.

Mit dem als Sprühkühler ausgebildeten Wärmetauscher kann bei geringstem Raumbedarf die große Menge anfallendem Wasserdampfes als Kondenswasser niedergeschlagen werden.

Auch hat es sich als besonders vorteilhaft erwiesen, den Wirbelschichtofen etwa mittig auf der Ladefläche des motorgetriebenen Fahrzeuges in die weitgehend kompakte Einheit zu integrieren, da hierdurch Rohrverbinder, bzw. die erforderlichen Leitungen zu den einzelnen Vorrichtungen besonders kurz gehalten werden können. Die mobile Entsorgungseinrichtung belastet die Umwelt in keiner Weise, Frischluft wird nur in der Menge benötigt, wie Sauerstoff im Feststoffbrenner erforderlich ist, ansonsten wird das Wirbelgas innerhalb der Einrichtung im Kreislauf geführt. Das anfallende Kondenswasser kann bedenkenlos direkt in die Kanalisation geleitet werden, und die anfallende Asche läßt sich entweder industriell weiterverwenden, oder jeder beliebigen Mülldeponie zuführen. Die Ganzstahlausführung des Feststoffbrenners hat schließlich noch den Vorteil eines hohen Sicherheitsfaktors der Gesamtanlage bei gleichzeitiger Minimierung ihrer Abmessung.

Die beiliegende Zeichnung, die eine nur beispielsweise Ausführungsform darstellt, dient der näheren Erläuterung des Erfindungsgedankens. Es zeigen:
- Fig. 1: eine seitliche Darstellung der mobilen Entsorgungseinrichtung,
- Fig. 2: eine Draufsicht auf die Einrichtung gemäß Fig. 1 und
- Fig. 3: ein Verfahrensdiagramm.

Wie aus den schematisiert wiedergegebenen Zeichnungsdarstellungen ersichtlich, besteht die mobile Entsorgungseinrichtung für vorzugsweise stark wasserhaltige Abfallstoffe aus einer auf einem Lastkraftwagen oder dergleichen Fahrzeug 1 zusammengefaßten Einheit und einer weiteren auf einem Hänger 2 des Fahrzeuges 1 installierten Teileinrichtung. Letztere wird durch eine mechanische Vortrocknung 3 vorgegeben, die hier in Form einer Siebbandpresse ausgebildet ist.

Im Ausführungsbeispiel ist der Lastkraftwagen für den Transport der fest installierten Klärschlammtrocknungs- und -verbrennungsanlage ein Fahrzeug mit einer Nutzlast von ca. 12000 kg, einer Länge von 8,2 m,einer Breite von ca. 2,4 m und einer Höhe von 2,7 m. Der Unterbau des Fahrzeuges ist in Flachbauweise ausgeführt, wobei der Boden aus 27 mm dicken Schiffsbauplatten mit starken Umfassungsrahmen besteht. Im Bereich des Feststoffbrenners 6 ist auf ca. 2,5 m Länge eine Stahlraupenblechplatte zusätzlich auf diesen Boden aufgeschraubt. Die Seitenbordwände des Fahrzeuges sind 80 cm hoch und nach unten klappbar sowie durch zwei Mittelpfosten geteilt. Oberhalb der Seitenbordwände, die in der Zeichnung nicht mehr dargestellt sind, befinden sich ca. 2 m hohe Ausstellklappen, die in Scharnieren aufgehängt mittels Gasfedern unterstützt schwenkbar sind. Die Hinterwand des Aufbaues ist ebenfalls durch derartige Ausstellklappen verschlossen, die ihrerseits wiederum waagerecht nach oben ausstellbar sind. Eine geschlossene wiederum nicht dargestellte Rahmenkonstruktion umschließt die auf dem Fahrzeug installierte Einheit, wobei ein festes Dach aus glasfaserverstärkten Polyesterplatten die Rahmenkonstruktion nach oben lichtdurchlässig verschließt.

Eine ausziehbare Treppe 11 ist seitlich an der Ladefläche des Fahrzeuges befestigt.

Wie dargestellt, nimmt die Ladefläche des Fahrzeuges 1 in Fahrtrichtung von vorn nach hinten gesehen den Abscheider 5 auf und unmittelbar daran anschließend den Feststoffbrenner 6. Der Abscheider 5 dient der Trennung von Rauchgas und Asche aus dem Feststoffbrenner 6. Der Durchsatz dieses Abscheiders beträgt im Ausführungsbeispiel ca. 3850 Nm³/h. Die anfallende Asche wird über eine nicht dargestellte Zellenradschleuse bei einer Durchsatzleistung von 120 kg/h ausgetragen und kann möglicherweise als Zwischenprodukt weiterverarbeitet oder mit minimiertem Volumen einer normalen Deponie zugeführt werden. Der Feststoffbrenner 6 für die Verbrennung des getrockneten Klärschlamms besteht aus einer kompletten geschweißten Ganzstahlausführung und kennzeichnet sich bei einem Durchsatz von 240 kg/h durch eine Wärmeleistung von etwa 0,9 MWh.

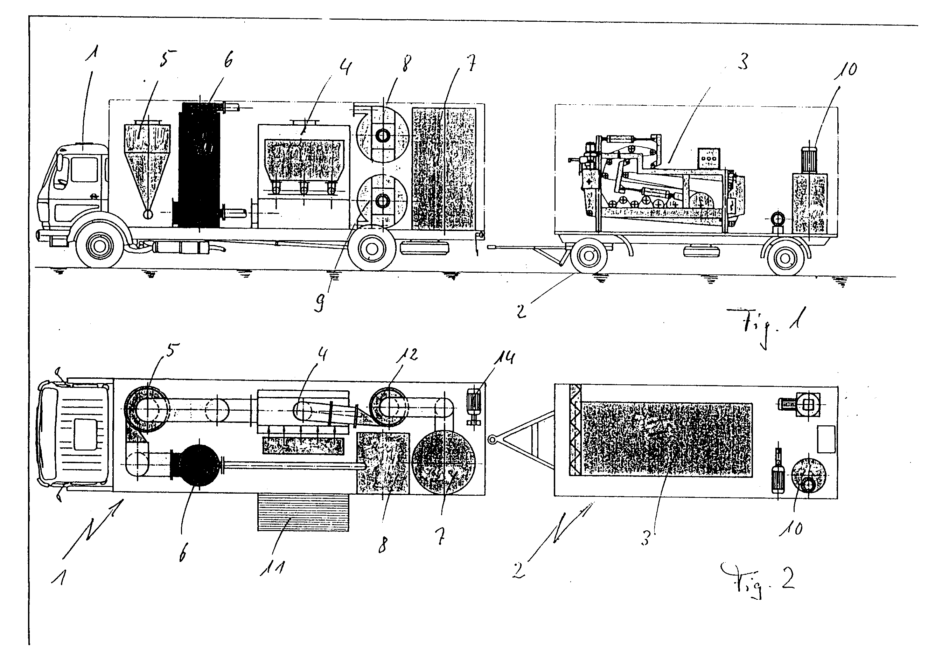

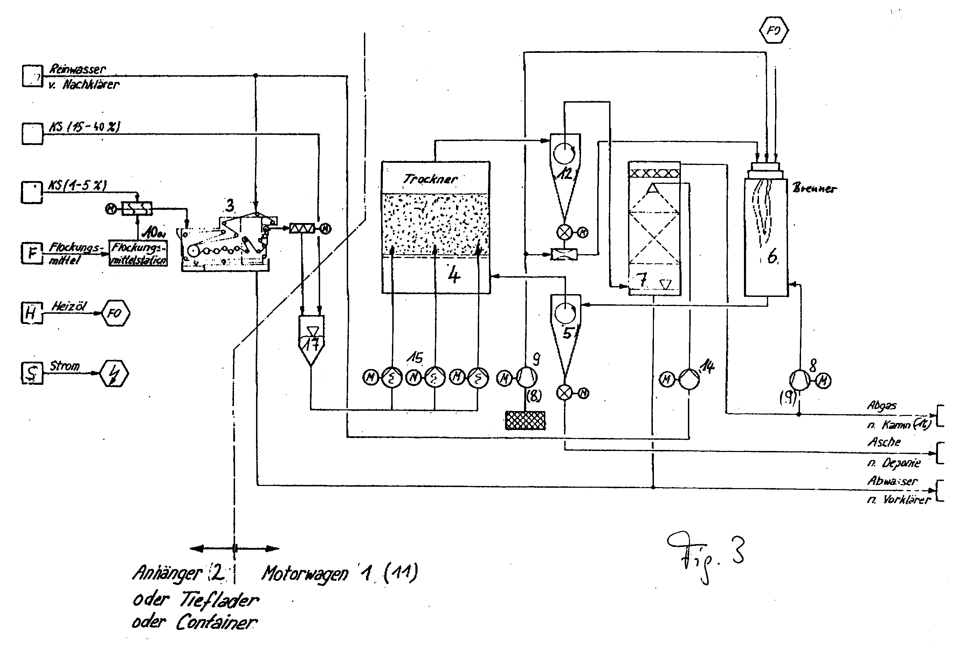

Zentral, d.h. mittig auf der Ladefläche des Fahrzeuges 1 ist der Wirbelschichttrockner 4 in Stellung gebracht, mit dem es möglich ist, den Klärschlamm oder dergleichen auf 20 bis 30 % Trockensubstanz vorgetrocknetes Verbrennungsmaterial auf 97 % Trockensubstanz zu bringen. Bei einem Durchsatz von 1200 kg/h benötigt der Wirbelschichtofen nur eine Grundfläche von 0,6 x 1,8 m und besteht aus einer Schweißkonstruktion mit Edelstahlguß-Ausströmboden, was zu einer besonders leichten Ausbildung des Wirbelschichtofens führt. Der getrocknete Klärschlamm wird von dem Wirbelgas in dem nachgeschalteten Feststoffabscheider 12 getrennt, wobei die Abscheidungsleistung bei mehr als 95 % liegt mit einer Durchsatzleistung von 5000 Nm³/h. Ein Gebläse 8 versorgt den Feststoffbrenner 6 mit einem Durchsatz von 1000 Nm³/h mit Verbrennungsluft. Ein weiteres darüber angeordnetes Gebläse 9 dient der Rückführung bzw. der Druckerhöhung des Abgases aus dem Sprühkühler 7 zum Feststoffbrenner 6. Der Sprühkühler 7 ist als Wäscher ein Kondensatwasserabscheider für die gesamte Gasmenge, die aus dem Wirbelschichttrockner 4 austritt. Der Durchsatz des Sprühkühlers 7 liegt bei ca. 5000 Nm³/h. Er hat im Ausführungsbeispiel einen Durchmesser von ca. 1,4 m bei einer Höhe von ca. 2 m. Schließlich ist in Fig. 2 noch eine Pumpe 14 für Reinwasser für das Kühl- bzw. Waschwasser aus dem vorhandenen Nachklärbecken, welches dem Sprühkühler 7 nachgeschaltet ist, dargestellt. Ein pneumatischer Förderer für die Feststofförderung in den Feststoffbrenner 6 kann integraler Bestandteil dieser Behälterkonstruktion sein.

Wie vorstehendbereits angedeutet, befindet sich auf dem Hänger 2 ausschließlich die mechanische Vortrocknungsvorrichtung 3, die den Klärschlamm oder dergleichen Ausgangsprodukt auf eine Trocknung von 20 bis 30 % Trockenmasse bringt, wobei eine Zellenradschleuse 10 für den Austrag des trockenen Klärschlammes vor seiner Einbringung in den Wirbelschichttrockner 4 sorgt.

Im Wirbelschichttrockner 4 wird durch das von unten anströmende Trocknungsgas eine Sandschicht in der Schwebe gehalten, in die der feuchte Klärschlamm eingegeben wird. Der Sand zerreibt den Klärschlamm und aufgrund der intensiven Wärme- und Stoffübergänge wird eine schnelle Trocknung gewährleistet. Diese Trocknung des Klärschlamms erfolgt energiesparend bei relativ niedrigen Temperaturen. Das aus dem Trockner austretende Produktgas führt den getrockneten Klärschlamm staubförmig mit sich. Im nachgeschalteten Feststoffabscheider 12 werden Gas und Klärschlamm voneinander getrennt. Der Klärschlamm wird pneumatisch zum Feststoffbrenner 6 befördert, wobei es sich bei diesem Brenner um einen Kombinationsbrenner handelt, der sowohl für Klärschlamm als auch besonders in der Anfahrphase mit Heizöl betrieben werden kann.

Das im Feststoffabscheider 12 gereinigte Trocknungsgas durchläuft den Sprühkühler 7,in dem die Dampfbrüden kondensiert werden. Diese Brüden bilden das bei der Trocknung anfallende Kondensat, das als Abwasser zusammen mit dem Kühlwasser kontinuierlich zurück in die Kläranlage fließt, wobei es vorzugsweise in einen Vorklärer gegeben wird.

Die zur Klärschlammtrocknung erforderliche Energie wird durch die Verbrennung des getrockneten Klärschlammes erzeugt. Von dem anfallenden Wirbel- oder Trocknungsgas werden ca. 70 % im Kreislauf gehalten, d.h. zurückgeführt und dem heißen Rauchgas, so wie es den Feststoffbrenner 6 verläßt, zugegeben. Hierdurch läßt sich eine optimale Temperatureinstellung und Temperaturregelung für das in die Wirbelschicht eintretende Trocknungsgas vornehmen. Nur der verbleibende Überschuß des aus dem Sprühkühler 7 austretenden gereinigten Gases wird an die Umwelt abgegeben.

Die Anfahrzeit der wie oben beschriebenen Trocknungseinrichtung bis zu ihrer Betriebsbereitschaft dauert ca. eine Stunde und es lassen sich ca. 1200 kg/h Klärschlamm mit 20 bis 30 % Trockensubstanz verarbeiten. Der Durchsatz an Klärschlamm für die Einrichtung, die sowohl kontinuierlich als auch diskontinuierlich betrieben werden kann, kann zwischen 0,4 bis 1,3 m³/h betragen.

Die Anpassung an unterschiedliche Betriebsbedingungen, etwa unterschiedliche Trockensubstanzgehalte von ca. 15 bis 25 % Trockensubstanz, erfolgt vollautomatisch.

Dadurch, daß der zu verbrennende Klärschlamm nach der mechanischen Vorentwässerung dosiert in den Wirbelschichttrockner eingebracht wird, der ausschließlich mit Rauchgas aus der Verbrennung des getrockneten Klärschlammes und dem Rückführgas, wie vorstehend beschrieben, beschickt wird, ist mit der vollautomatischen Regelung der Anlage auch eine Optimierung der Energiebilanz möglich. Die in fluidisierendem Zustand gehaltene Sandwirbelschicht in dem Wirbelschichttrockner,über deren gesamten Querschnitt das Trocknungsgas verteilt wird, führt den Schlamm in spezifisch leichte Feststoffpartikel über, die sich leicht in dem nachgeschalteten Feststoffabscheider vom Wirbelgas trennen lassen, um in der genannten Weise dem Feststoffbrenner zugeführt werden zu können.

Das Verfahrenschema gemäß Fig. 3 beschreibt in übersichtlicher Form den Ablauf der einzelnen Schritte:
Der von der Kläranlage übernommene Schlamm wird in dem Mischer 10 mit dem in der Flockungsmittelstation 10a angesetzten Flockungshilfsmittel F intensiv vermischt und in der Siebbandpresse 3 entwässert. Der abgepreßte Schlamm wird über eine Fördereinrichtung in den Vorlagebehälter 17 gefördert und von dort aus über die Pumpen 15 in den Wirbelschichttrockner 4 eingegeben.

Im Wirbelschichttrockner 4 wird durch das von unten anströmende Trocknungsgas eine Sandschicht in der Schwebe gehalten, in die der feuchte Klärschlamm eingegeben wird. Der Sand zerreibt den Klärschlamm, durch den intensiven Wärme- und Stoffübergang wird eine schnelle Trocknung gewährleistet. Die Trocknung des Klärschlamms erfolgt bei relativ niedrigem Temperaturniveau. Das aus dem Wirbelschichttrockner 4 austretende Gas führt den getrockneten Klärschlamm staubförmig mit sich. Im nachfolgenden Zyklon 12 werden Gas und Klärschlamm getrennt, und der Klärschlamm wird pneumatisch zu einem Kombinationsbrenner 6 für die Verbrennung des Klärschlamms sowie ggf. von Heizöl bzw. Propan o.dgl. gefördert und dort verbrannt.

Dem Abgas des Brenners 6 wird das Rückführgas zur Einstellung der Trocknungstemperatur beigemischt. Nachfolgend wird die staubförmige Asche im Zyklon 6 abgeschieden und das Gas in den Wirbelschichttrockner 4 zurückgeleitet. Die Asche kann über Fördereinrichtungen aus dem Zyklon 5 bzw. aus dem Sumpf des Feststoffbrenners staubförmig oder granuliert abgezogen werden.

Das gereinigte Trocknungsgas durchläuft den Sprühkühler 7, in dem die Brüden kondensiert werden. Diese Brüden bilden das bei der Trocknung anfallende Kondensat, das als Abwasser zusammen mit dem Kühlwasser kontinuierlich zurück in die Kläranlage, vorzugsweise in den Vorklärer, fließt, in dem die Abwasserreinigung erfolgt.

Die vorstehend beschriebene Anlage kann in der dargestellten Form auf das Fahrzeug 1 und den Hänger 2 aufgeteilt sein. Es ist jedoch möglich, die Gesamtanlage auf einen Tieflader zu installieren. Hierbei ist es dann besonders vorteilhaft, die Einrichtung in einen Container unterzubringen, der wahlweise vom Fahrzeug entnommen und damit als temporär stationäre Anlage betrieben werden kann.

Vorteilhaft ist es schließlich auch, den von der Einrichtung in die Atmosphäre abzugebenden Anteil der Abgase mittels eines Adsorbers, etwa unter Verwendung von Aktivkohle nachzubehandeln und/oder die Temperaturregelung dieses Abgasanteils über die Einspritzkühlung vorzunehmen.

## Patentansprüche

1. Entsorgungseinrichtung für wasserhaltige Abfallstoffe, wie Klärschlamm, Feuchtabfälle in Gärtnereien oder dgl. mehr, bei der die für die Trocknung erforderliche Verdampfungsenergie, zumindest zu einem erheblichen Teil aus der Verbrennung der Feststoffanteile des Ausgangsmaterials gewonnen wird, bestehend aus mechanischem Vortrockner, Wirbelschichttrockner, Feststoffabscheider, Feststoffbrenner, Ascheabscheider und Wärmetauscher,
dadurch gekennzeichnet, daß die Wirbelschichttrocknung (4) und die Feststoffverbrennung (6) mit den zugehörigen Abscheidern (5, 7, 12), Gebläsen (8, 9) und Verteilervorrichtungen eine kompakte Einheit (4, 5, 6, 7, 8, 9, 12) und die mechanische Vortrocknung (3) eine zweite Einheit bildet, diese Einheiten gemeinsam auf einem oder auf jeweils einem mobilen Fahrzeug angeordnet und zu einer Gesamtanlage zusammengefaßt sind, dabei der der Wirbelschichttrocknung (4) und dem Feststoffabscheider (12) ein Sprühkühler nachgeschaltet ist, dessen ausgeschiedenes Kondensat der Kläranlage wieder zuführbar ist.

2. Einrichtung nach Anspruch 1, dadurch gekennzeichnet, daß der Wirbelschichttrockner (4) etwa mittig auf dem Fahrzeug (1) zentral in die kompakte Einheit integriert ist.

3. Einrichtung nach Anspruch 1 oder 2, dadurch gekennzeichnet, daß der Feststoffbrenner (6) in Ganzstahlausführung auf dem motorgetriebenen Fahrzeug (1) installiert ist.

## Claims

1. Waste disposal device for aqueous waste materials such as thickened solids, moist waste in nurseries or similar, the vaporising energy required for drying being obtained at least to a large extent from the combustion of the solids content of the base material, comprising mechanical pre-drier, fluidised bed drier, solids separator, solids burner, ash separator and heat exchanger,
characterised in that the fluidised bed drier (4) and the solids burner (6) together with the associated separators (5,7,12), blowers (8,9) and spreading devices form a compact unit (4,5,6,7,8,9,12) and the mechanical pre-drier (3) forms a second unit, these units being arranged together on a mobile vehicle and combined to form a complete plant, a spray cooler being connected in series with the fluidised bed drier (4) and the solids separator (12) the condensate from which spray cooler can be re-fed to the sewage plant.

2. Device according to claim 1 characterised in that the fluidised bed drier (4) located approximately centrally on the vehicle (1) is centrally integrated in the compact unit.

3. Device according to claim 1 or 2 characterised in that the all-steel solids burner (6) is installed on the motor-driven vehicle (1).

## Revendications

1. Dispositif d'évacuation de déchets contenant de l'eau, tels que les boues de décantation, les déchets humides de jardinage et autres, dans lequel, au moins une partie importante de l'énergie nécessaire pour le séchage par évaporation est tirée de la combustion des parties solides de la matière résultante, et qui comprend un dispositif de préséchage mécanique, un sécheur tourbillonnaire étagé, un séparateur de parties solides, un brûleur des parties solides, un séparateur de cendres et un échangeur de chaleur, caractérisé en ce que le séchage tourbillonnaire étagé (4) et la combustion des parties solides (6) avec les séparateurs correspondants (5, 7, 12), les ventilateurs (8, 9) et les dispositifs de distribution forment une unité compacte (4, 5, 6, 7, 8, 9, 12) et en ce que le préséchage mécanique (3) forme une seconde unité, ces unités étant disposées ensemble ou séparément sur un véhicule mobile, et réunies en une installation d'ensemble, et en ce qu'un refroidisseur par aspersion est disposé après le séchage tourbillonnaire étagé (4) et le séparateur de parties solides (12) et dont le condensat dégagé peut être retourné à l'installation d'épuration.

2. Dispositif selon la revendication 1, caractérisé en ce que le séchage tourbillonnaire étagé (4) est intégré sensiblement au milieu du véhicule (1) au centre de l'unité compacte.

3. Dispositif selon la revendication 1, ou 2, caractérisée en ce que le brûleur de parties solides (6), réalisé tout en acier, est installé sur le véhicule motorisé (1).
